# FASCICULE DE BREVET EUROPEEN

(11) **EP 1 008 841 B1**
(45) Date de publication et mention de la délivrance du brevet: **25.04.2007**
(21) Numéro de dépôt: 99402928.8
(22) Date de dépôt: 25.11.1999
(51) Int. Cl.: G01M 3/20

(54) **Vitesse variable sur le pompage primaire d'un détecteur de fuites par gaz traceur**
Primäres Pumpen mit variabler Geschwindigkeit für einen Gastracer-Leckdetektor
Variable primary pumping speed for a tracer gas leakage detector

(30) Priorité: 10.12.1998 FR 9815579
(43) Date de publication de la demande: 14.06.2000
(73) Titulaire: Alcatel Lucent, 75008 Paris (FR)
(72) Inventeur: Pierrejean, Didier, 74370 Villaz (FR); Rouveyre, Frédéric, 74650 Chavanod (FR); Seigeot, Bertrand, 74230 Dingy Saint Clair (FR)
(74) Mandataire: Lamoureux, Bernard

(56) Documents cités:
- EP-A- 0 283 543
- EP-A- 0 464 292
- FR-A- 2 405 479
- FR-A- 2 657 164
- FR-A- 2 666 410
- FR-A- 2 734 053
- US-A- 4 487 058
- US-A- 4 593 530
- US-A- 5 561 240
- US-A- 5 585 548
- US-A- 5 668 328
- US-A- 5 900 537

## Description

La présente invention concerne les procédés et dispositifs de détection de fuites par aspiration des gaz à une entrée d'aspiration et par détection d'un gaz traceur tel que l'hélium au moyen d'un détecteur tel qu'un spectromètre de masse associé à des pompes primaire et secondaire.

Dans ces procédés et dispositifs connus, un spectromètre de masse est raccordé à l'aspiration d'une pompe secondaire dont le refoulement est raccordé à l'aspiration d'une pompe primaire sollicitée par un dispositif d'entraînement en rotation. Les gaz sont aspirés par une entrée de détecteur connectable sélectivement par l'intermédiaire de vannes de commande soit à l'aspiration de la pompe secondaire soit au refoulement ou en une zone intermédiaire de la pompe secondaire.

Le document US-5,561,240 décrit un procédé de détection de fuite à l'helium dans lequel les gaz à analyser sont introduits à différents niveaux de la pompe secondaire au moyens de vannes commandées automatiquement par une jauge de

pression. Par ailleurs, le document FR-2 666 410 propose un dispositif de détection de fuite par aspiration des gaz par une pompe secondaire à grande vitesse de rotation connectée à des pompes secondaires de vitesse plus faible utilisées comme filtre.

Dans un tel détecteur de fuites à spectromètre de masse, on peut utiliser trois modes de test de base :
a. le test par contre-courant total, dans lequel l'entrée d'aspiration du détecteur est connectée au refoulement de la pompe secondaire, et donc à l'aspiration de la pompe primaire : le spectromètre de masse détecte alors la fraction d'un gaz traceur tel que l'hélium qui remonte à contre-courant la pompe secondaire ;
b. le test en direct, dans lequel l'entrée d'aspiration du détecteur est connectée à l'aspiration de la pompe secondaire, c'est-à-dire à l'entrée du spectromètre de masse : le spectromètre de masse détecte alors directement le gaz traceur tel que l'hélium provenant de l'entrée du détecteur ;
c. le test en semi direct, ou contre-courant partiel, dans lequel l'entrée d'aspiration du détecteur est connectée à une zone intermédiaire entre l'aspiration et le refoulement de la pompe secondaire : le spectromètre de masse détecte alors le gaz traceur tel que l'hélium qui remonte à contre-courant la portion de pompe secondaire située entre la zone de raccordement de l'entrée d'aspiration du détecteur et l'aspiration de la pompe secondaire.

En pratique, au cours d'une première étape de prévidage, l'entrée du détecteur est généralement connectée à l'aspiration de la pompe primaire, qui aspire les gaz jusqu'à atteindre un seuil intermédiaire de pression permettant le test par contre-courant total. Ce seuil intermédiaire dépend de la pompe secondaire, mais est généralement de l'ordre de 10⁻¹ à 10 hPa.

Lorsque le seuil de pression est atteint à l'aspiration de la pompe primaire, la pompe secondaire peut fonctionner correctement. On connecte alors son refoulement à l'aspiration de la pompe primaire par ouverture d'une vanne de connexion, et l'on peut réaliser une étape de test par contre-courant total.

Ultérieurement, lorsque la pression à l'entrée du détecteur a atteint un seuil inférieur de pression suffisamment bas, généralement inférieur à 10⁻² hPa, on peut passer en mode de test en direct en connectant l'entrée du détecteur directement à l'aspiration de la pompe secondaire et en déconnectant sa liaison à l'aspiration de la pompe primaire.

On comprend que les caractéristiques de la pompe primaire utilisée sur le détecteur de fuites affecte directement les performances du détecteur. En effet, la vitesse de pompage de la pompe primaire détermine la durée de la phase de prévidage ou durée d'attente avant que le test puisse commencer. La vitesse de pompage de la pompe primaire détermine aussi le flux maximum admissible par le détecteur pour que le spectromètre de masse puisse détecter efficacement le gaz traceur en contre-courant total. Egalement, la vitesse d'aspiration de la pompe primaire détermine la sensibilité et le temps de réponse du détecteur lorsqu'il est utilisé en mode de test par contre-courant total. Enfin, la pompe primaire présente en général une capacité limitée à évacuer le gaz traceur en aval de la pompe secondaire, et il en résulte un signal parasite sur le spectromètre de masse, résultant de la remontée de gaz traceur à contre-courant à travers la pompe secondaire dans le mode de test en direct ou en semi direct.

Un premier problème proposé par la présente invention est de réduire la durée du prévidage, afin de débuter le test le plus rapidement possible, avec une même pompe primaire.

Un autre problème proposé par l'invention est de donner à un détecteur de fuites la possibilité de détecter de plus grosses fuites ou de compenser un dégazage important, avec une même pompe primaire.

Un autre problème proposé par l'invention est d'adapter la sensibilité du détecteur de fuites en fonction des caractéristiques de la fuite à tester, à partir d'une même pompe primaire.

Un autre problème proposé par la présente invention est de supprimer le bruit de fond hélium provenant de la pompe primaire, en éliminant le signal parasite résultant de la remontée de gaz traceur tel que l'hélium en contre-courant dans la pompe secondaire lors d'un test en mode direct.

Pour atteindre ces buts ainsi que d'autres, l'invention prévoit un procédé de détection de fuites par aspiration des gaz à une entrée d'aspiration et par détection d'un gaz traceur au moyen d'un détecteur tel qu'un spectromètre de masse associé à des pompes primaire et secondaire, le procédé comprenant au moins une première étape d'aspiration au cours de laquelle la pompe primaire est entraînée en rotation selon une première plage de vitesses, et une deuxième étape d'aspiration au cours de laquelle la pompe primaire est entraînée en rotation selon une deuxième vitesse différente de la première plage de vitesses.

Selon un premier mode de réalisation, la deuxième vitesse est la vitesse nominale de la pompe primaire, et les vitesses de la première plage de vitesses sont supérieures à la vitesse nominale de la pompe primaire.

Dans une première application, la première plage de vitesses est utilisée pendant une durée limitée de première étape de prévidage au cours de laquelle l'entrée d'aspiration est connectée directement à l'aspiration de la pompe primaire.

Dans une deuxième application, la première plage de vitesses est utilisée au cours d'une étape de test par contre-courant total pour compenser un dégazage important ou détecter de plus grosses fuites.

Selon un second mode de réalisation, les vitesses de la première plage de vitesses sont inférieures à la vitesse nominale de la pompe primaire, et la première plage de vitesse est utilisée au cours d'une étape de test par contre-courant total pour réduire la vitesse de pompage et augmenter ainsi la sensibilité de la détection.

Selon un troisième mode de réalisation, les première et seconde vitesses étant différentes, on enregistre les vitesses et les signaux produits par le détecteur tel que le spectromètre de masse au cours de chacune des deux étapes d'aspiration, et on calcule à partir des valeurs enregistrées le signal utile résultant du gaz traceur provenant de l'entrée d'aspiration en retranchant le signal parasite résultant du gaz traceur remontant à contre-courant à travers la pompe secondaire.

Selon une mise en oeuvre particulière avantageuse de ce troisième mode de réalisation :
on module partiellement la vitesse de rotation de la pompe primaire avec une composante de vitesse alternative à basse fréquence,
dans le signal total provenant du spectromètre de masse, on dissocie la composante modulée,
à partir de la composante modulée et de la valeur de modulation de vitesse de rotation de la pompe primaire, on calcule le signal parasite lié à la vitesse de rotation de la pompe primaire et on le retranche du signal total pour en déduire en temps réel le signal utile.

Un dispositif de détection de fuites selon l'invention, permettant la mise en oeuvre de ce procédé, comprend un spectromètre de masse raccordé à l'aspiration d'une pompe primaire sollicitée par un dispositif d'entraînement en rotation, avec une entrée d'aspiration connectable sélectivement par l'intermédiaire de vannes de commande soit à l'aspiration de la pompe primaire, soit à l'aspiration ou en une zone intermédiaire de la pompe secondaire ; le dispositif d'entraînement en rotation de la pompe primaire est adapté pour faire varier la vitesse de rotation de la pompe primaire entre au moins deux vitesses de rotation différentes l'une de l'autre.

On pourra avantageusement prévoir un dispositif d'entraînement en rotation qui soit adapté pour moduler la vitesse de rotation de la pompe primaire avec une composante de vitesse alternative à basse fréquence.

Dans ce cas, on pourra avantageusement prévoir un capteur de vitesse pour mesurer la vitesse de rotation de la pompe primaire, des moyens pour enregistrer la suite temporelle des signaux dudit capteur de vitesse et des signaux produits par le spectromètre de masse, et des moyens de calcul pour calculer le signal utile à partir des signaux enregistrés.

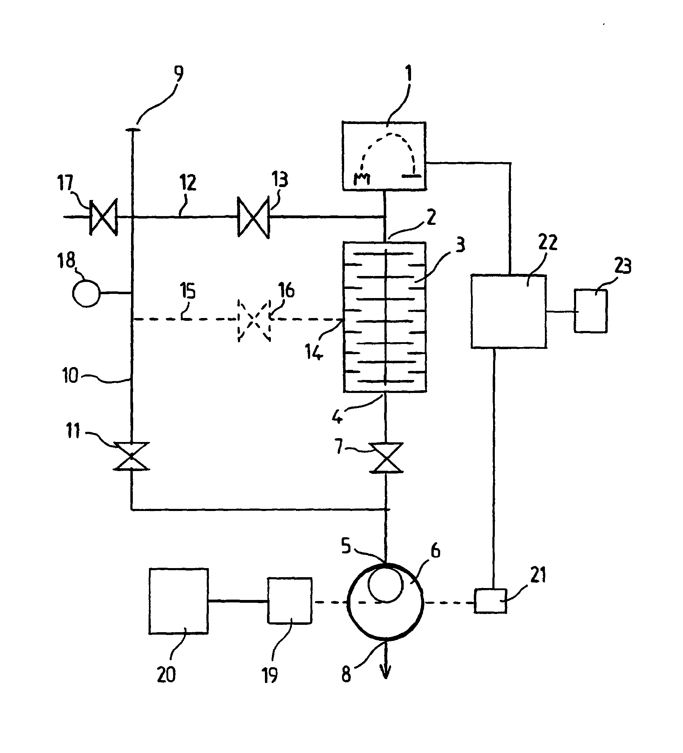

D'autres objets, caractéristiques et avantages de la présente invention ressortiront de la description suivante de modes de réalisation particuliers, faite en relation avec la figure jointe, illustrant schématiquement la structure d'un détecteur de fuites selon la présente invention.

Dans le mode de réalisation illustré sur la figure, le dispositif de détection de fuites selon l'invention comprend un détecteur tel qu'un spectromètre de masse 1 raccordé à l'aspiration 2 d'une pompe secondaire 3 dont le refoulement 4 est raccordé à l'aspiration 5 d'une pompe primaire 6 par l'intermédiaire d'une canalisation munie d'une vanne de test grosses fuites 7. La pompe primaire 6 refoule les gaz à l'atmosphère par son refoulement 8.

Une entrée d'aspiration 9 du dispositif de détection de fuites est raccordée à l'aspiration 5 de la pompe primaire 6 par une canalisation de prévidage 10 munie d'une vanne de prévidage 11. L'entrée d'aspiration 9 est également raccordée à l'aspiration 2 de la pompe secondaire 3 par une canalisation directe 12 munie d'une vanne de test direct 13, et/ou à une zone intermédiaire 14 de la pompe secondaire 3 par une canalisation semi directe 15 munie d'une vanne de test semi direct 16.

Une vanne d'entrée d'air 17 permet sélectivement l'entrée d'air à l'entrée d'aspiration 9. Un manomètre 18 permet la mesure de la pression dans la canalisation de prévidage 10.

La pompe primaire 6 peut être une pompe à palettes, capable de réaliser à son aspiration 5 une pression de gaz suffisamment basse, par exemple de l'ordre de 10⁻¹ à 10 hPa, pour permettre le fonctionnement d'une pompe secondaire 3 produisant elle-même à son aspiration 2 une pression suffisamment basse, par exemple inférieure à 10⁻⁴ hPa, pour être compatible avec le fonctionnement d'un spectromètre de masse 1.

Selon l'invention, la pompe primaire 6 est sollicitée en rotation par un dispositif d'entraînement en rotation qui permet de faire varier la vitesse de rotation de la pompe primaire 6 entre au moins deux vitesses de rotation V1 et V2 différentes l'une de l'autre. Par exemple, on peut utiliser un moteur triphasé 19 alimenté en monophasé par une alimentation 20 permettant de réaliser une vitesse de rotation modulable, indépendante de la fréquence et de la tension du secteur d'alimentation.

Un capteur de vitesse 21 mesure la vitesse de rotation de la pompe primaire, et produit un signal envoyé à une unité de calcul 22 telle qu'un microprocesseur ou un microcontrôleur, qui reçoit également les signaux de mesure produits par le détecteur tel que le spectromètre de masse 1 et qui délivre les résultats de calcul sur un dispositif d'entrée-sortie 23 tel qu'un écran ou une imprimante.

Au cours d'une première étape de fonctionnement, ou étape de prévidage, les pompes primaire 6 et secondaire 3 sont entraînées en rotation, les vannes de test direct 13 ou semi direct 16 sont fermées, la vanne de test grosses fuites 7 est fermée, la vanne d'entrée d'air 17 est fermée. On ouvre alors la vanne de prévidage 11, de sorte que la pompe primaire 6 aspire directement les gaz provenant de l'entrée d'aspiration 9 pour les refouler à l'atmosphère. Par suite de cette aspiration, la pression des gaz diminue progressivement à l'entrée d'aspiration 9, et cette pression est mesurée par le manomètre 18.

La vitesse de pompage de la pompe primaire 6 est directement liée à sa vitesse de rotation, au moins dans une certaine plage. Ainsi, pendant cette étape de prévidage, on entraîne la pompe primaire 6 en rotation selon une première vitesse V1 nettement supérieure à sa vitesse nominale. Par exemple, dans le cas d'une pompe primaire 6 à palettes, on peut doubler sa vitesse de rotation, ce qui réduit dans un rapport 2 le temps nécessaire pour réduire la pression des gaz jusqu'à un seuil intermédiaire de l'ordre de 10⁻¹ à 10 hPa permettant le début du test par le spectromètre de masse 1.

Lorsque le seuil intermédiaire de pression de gaz approprié est atteint à l'entrée d'aspiration 9 et dans la canalisation de prévidage 10, le test peut commencer car le spectromètre de masse 1 devient capable de produire un signal image de la quantité de gaz traceur présente à l'aspiration de la pompe secondaire 3. On ouvre alors la vanne de test grosses fuites 7, et le spectromètre de masse 1 détecte le flux de gaz traceur tel que l'hélium remontant à contre-courant à travers la pompe secondaire 3. La pompe primaire 6 peut alors fonctionner à sa vitesse nominale V2.

Au cours de l'étape de test en mode contre-courant total, le flux maximum admissible des gaz dans l'entrée d'aspiration 9 est directement lié aux caractéristiques de la pompe primaire 6. En cas de besoin, on entraîne en rotation la pompe primaire 6 selon une première plage de vitesses V1 supérieure à la vitesse nominale V2, de façon que la pompe primaire 6 absorbe plus de flux gazeux et permette ainsi d'atteindre les pressions compatibles avec le fonctionnement du détecteur tel que le spectromètre de masse 1.

En alternative, au cours de cette étape de test en contre-courant total, on constate que la sensibilité du dispositif de détection de fuites est directement liée à la vitesse de pompage de gaz traceur de la pompe primaire 6. En effet, pour un taux de compression de gaz traceur constant de la pompe secondaire 3, la pression partielle de gaz traceur vue par le détecteur tel que le spectromètre de masse 1 est proportionnelle à la pression partielle de gaz traceur à l'aspiration de la pompe primaire 6. Par ailleurs, la pression partielle de gaz traceur à l'aspiration de la pompe primaire 6 est inversement proportionnelle à la vitesse de pompage de gaz traceur de la pompe primaire 6, qui est elle-même proportionnelle à sa vitesse de rotation V. Si on diminue la vitesse de rotation V, on diminue d'autant la vitesse de pompage et on augmente ainsi dans les mêmes proportions la pression partielle de gaz traceur vue par le détecteur tel que le spectromètre de masse 1, et donc la sensibilité du dispositif de détection de fuites. Ainsi, on peut augmenter la sensibilité du dispositif en réduisant la vitesse de rotation V de la pompe primaire 6. L'amplitude de ce réglage peut atteindre un rapport 5 ou plus pour une pompe à palettes, ce qui est très significatif sur les performances du détecteur.

En poursuivant l'aspiration des gaz par la pompe primaire 6, on peut atteindre à l'entrée d'aspiration 9 et dans la canalisation de prévidage 10 un seuil inférieur de pression suffisamment bas, généralement inférieur à 10⁻⁴ hPa, pour permettre le fonctionnement direct du détecteur tel que le spectromètre de masse 1. On passe alors à une étape de test en direct, en fermant la vanne de prévidage 11 et en ouvrant la vanne de test direct 13 (ou la vanne de test semi direct 16 pour un test en semi direct). En fonctionnement normal, la pompe primaire 6 est entraînée en rotation à sa vitesse nominale V2. Le détecteur tel que le spectromètre de masse 1 détecte alors le gaz traceur provenant directement de l'entrée d'aspiration 9. Toutefois, cette mesure est perturbée par une remontée parasite de gaz traceur tel que l'hélium, qui remonte en contre-courant à travers la pompe secondaire 3 à partir de la pompe primaire 6. Il en résulte en sortie du spectromètre de masse 1 un signal parasite ou bruit de fond hélium. On considère que le signal S en sortie du détecteur tel que le spectromètre de masse 1 est la somme d'un signal utile Su et d'un signal parasite Sp.

On a pu constater que ce signal parasite Sp varie de façon inversement proportionnelle à la vitesse de rotation V de la pompe primaire 6, dans une certaine plage de variation de la vitesse. Pour une vitesse de rotation V2 constante de pompe primaire 6, égale par exemple à sa vitesse nominale, le signal sur le détecteur tel que le spectromètre de masse 1 est constant et prend une valeur donnée S2. En modifiant la vitesse de rotation V de la pompe primaire 6, pour lui donner une valeur V1, on retrouve en sortie du détecteur tel que le spectromètre de masse 1 un signal S1 différent de S2.

En mettant à profit cette observation, l'invention prévoit de faire varier la vitesse de rotation V de la pompe primaire 6 avec une fraction K connue de sa vitesse moyenne, par exemple en utilisant deux vitesses constantes V1 et V2 successives, ou par exemple en modulant la vitesse de rotation V avec une composante de vitesse alternative à basse fréquence. Une composante sinusoïdale à 1 Hz peut être envisagée. Le détecteur tel que le spectromètre de masse 1 fournit un signal S variant entre deux valeurs extrêmes S1 et S2.

Pour le calcul du signal parasite Sp provenant de la remontée de gaz traceur tel que l'hélium en contre-courant à travers la pompe secondaire 3, on suppose en première approximation que le rapport entre l'amplitude de la partie modulée et la composante moyenne du signal est le même pour la quantité de gaz traceur présente à l'aspiration 5 de la pompe primaire 6 et pour la vitesse de rotation de la pompe primaire 6.

On admet que la quantité de gaz traceur qui remonte à contre-courant la pompe secondaire est proportionnelle à la quantité de gaz traceur présente à l'aspiration de la pompe primaire. Par conséquent, en supposant que la variation (S1 - S2) du signal S est égale à la variation du signal parasite Sp, et que la variation relative du signal parasite Sp est, en première approximation, sensiblement égale à la variation relative de vitesse K = 2.(V1 - V2) / (V1 + V2) de la pompe primaire 6, il est alors possible de calculer la composante moyenne Sp = (S1 - S2) / K du signal parasite et de la retirer du signal total S mesuré par le spectromètre de masse pour obtenir la composante de signal utile Su provenant du seul gaz traceur issu de l'entrée d'aspiration 9.

Ainsi, connaissant la vitesse moyenne de la pompe primaire 6 et la valeur de modulation de sa vitesse, et connaissant l'amplitude de modulation du signal donné par le spectromètre de masse 1, on peut en déduire la valeur théorique Sp du signal parasite total que l'on retranche alors du signal total S pour obtenir le signal utile Su résultant de la détection du seul gaz traceur provenant de l'entrée d'aspiration 9.

Pour la mise en oeuvre de cette méthode de calcul, le capteur de vitesse 21 fournit à l'unité de calcul 22 un signal image de la vitesse instantanée de rotation V de la pompe primaire 6, et le spectromètre de masse 1 fournit à l'unité de calcul 22 la suite temporelle des signaux S de mesure de quantité de gaz traceur. L'unité de calcul 22 enregistre les suites temporelles de signaux de vitesse V et de signaux S de mesure de gaz, et en déduit en temps réel le signal utile Su envoyé au dispositif d'entrée-sortie 23.

## Revendications

1. - Procédé de détection de fuites par aspiration des gaz à une entrée d'aspiration (9) et par détection d'un gaz traceur au moyen d'un détecteur tel qu'un spectromètre de masse (1) associé à des pompes primaire (6) et secondaire (3), **caractérisé en ce qu'**il comprend au moins une première étape d'aspiration au cours de laquelle la pompe primaire (6) est entraînée en rotation selon une première plage de vitesses (V1), et une deuxième étape d'aspiration au cours de laquelle la pompe primaire (6) est entraînée en rotation selon une deuxième vitesse (V2) différente de la première plage de vitesses (V1).

2. - Procédé selon la revendication 1, **caractérisé en ce que** la deuxième vitesse (V2) est la vitesse nominale de la pompe primaire (6), et les vitesses de la première plage de vitesses (V1) sont supérieures à la vitesse nominale de la pompe primaire (6).

3. - Procédé selon la revendication 2, **caractérisé en ce que** la première plage de vitesses (V1) est utilisée pendant une durée limitée de première étape de prévidage au cours de laquelle l'entrée d'aspiration (9) est connectée directement à l'aspiration (5) de la pompe primaire (6).

4. - Procédé selon la revendication 2, **caractérisé en ce que** la première plage de vitesses (V1) est utilisée au cours d'une étape de test par contre-courant total pour compenser un dégazage important ou détecter de plus grosses fuites.

5. - Procédé selon la revendication 1, **caractérisé en ce que** les vitesses de la première plage de vitesses (V1) sont inférieures à la vitesse nominale (V2) de la pompe primaire (6), et la première plage de vitesse (V1) est utilisée au cours d'une étape de test par contre-courant total pour réduire la vitesse de pompage et augmenter ainsi la sensibilité de la détection.

6. - Procédé selon la revendication 1, **caractérisé en ce que**, au cours d'une étape de test en direct, on enregistre les vitesses (V1, V2) et les signaux (S1, S2) produits par le détecteur tel que le spectromètre de masse (1) au cours de chacune des deux étapes d'aspiration, et on calcule à partir des valeurs enregistrées le signal utile Su résultant du gaz traceur provenant de l'entrée d'aspiration (9) en retranchant le signal parasite Sp résultant du gaz traceur remontant à contre-courant à travers la pompe secondaire (3).

7. - Procédé selon la revendication 6, **caractérisé en ce que** :
on module partiellement la vitesse de rotation V de la pompe primaire (6) avec une composante de vitesse alternative à basse fréquence,
dans le signal total S provenant du détecteur tel que le spectromètre de masse (1), on dissocie la composante modulée,
à partir de la composante modulée et de la valeur de modulation de vitesse de rotation de la pompe primaire (6), on calcule le signal parasite Sp lié à la vitesse de rotation V de la pompe primaire (6) et on le retranche du signal total S pour en déduire en temps réel le signal utile Su.

8. - Dispositif de détection de fuites pour la mise en oeuvre d'un procédé selon l'une quelconque des revendications 1 à 7, comprenant un détecteur tel qu'un spectromètre de masse (1) raccordé à l'aspiration (5) d'une pompe primaire (6) sollicitée par un dispositif d'entraînement en rotation (19, 20), avec une entrée d'aspiration (9) connectable sélectivement par l'intermédiaire de vannes de commande (11, 13, 16) soit à l'aspiration (5) de la pompe primaire (6), soit à l'aspiration (2) ou en une zone intermédiaire (14) de la pompe secondaire (3), **caractérisé en ce que** le dispositif d'entraînement en rotation (19, 20) de la pompe primaire (6) est adapté pour faire varier la vitesse de rotation V de la pompe primaire (6) entre au moins deux vitesses de rotation (V1, V2) différentes l'une de l'autre.

9. - Dispositif selon la revendication 8, **caractérisé en ce que** le dispositif d'entraînement en rotation (19, 20) de la pompe primaire (6) est adapté pour moduler la vitesse de rotation V de la pompe primaire (6) avec une composante de vitesse alternative à basse fréquence.

10. - Dispositif selon la revendication 9, **caractérisé en ce qu'**il comprend un capteur de vitesse (21) pour mesurer la vitesse de rotation V de la pompe primaire (6), des moyens (22) pour enregistrer la suite temporelle des signaux V dudit capteur de vitesse (21) et des signaux S produits par le détecteur tel que le spectromètre de masse (1), et des moyens de calcul (22) pour calculer le signal utile Su à partir des signaux enregistrés (S, V).

## Claims

1. Method of detecting leaks by aspirating gases at an aspiration inlet (9) and by detecting a tracer gas by means of a detector such as a mass spectrometer (1) associated with a primary pump (6) and a secondary pump (3), **characterized in that** it comprises at least a first aspiration step during which the primary pump (6) is driven in rotation in a first speed range (V1) and a second aspiration step during which the primary pump (6) is driven in rotation at a second speed (V2) outside the first speed range (V1).

2. Method according to claim 1, **characterized in that** the second speed (V2) is the nominal speed of the primary pump (6) and the speeds of the first speed range (V1) are greater than the nominal speed of the primary pump (6).

3. Method according to claim 2, **characterized in that** the first speed range (V1) is used during a limited first pre-evacuation step period during which the aspiration inlet (9) is connected directly to the aspiration side (5) of the primary pump (6).

4. Method according to claim 2, **characterized in that** the first speed range (V1) is used during a total contraflow test step to compensate for a high level of outgassing or to detect grosser leaks.

5. Method according to claim 1, **characterized in that** the speeds of the first speed range (V1) are less than the nominal speed (V2) of the primary pump (6) and the first speed range (V1) is used during a total contraflow test step to reduce the pumping speed and thereby increase the sensitivity of detection.

6. Method according to claim 1, **characterized in that**, during a direct test step, the speeds (V1, V2) and the signals (S1, S2) produced by the detector such as the mass spectrometer (1) during each of the two aspiration steps are stored and the stored values are used to compute the usable signal Su resulting from the tracer gas coming from the aspiration inlet (9) by subtracting the spurious signal Sp resulting from the contraflow of tracer gas through the secondary pump (3).

7. Method according to claim 6, **characterized in that**:
the rotation speed V of the primary pump (6) is partially modulated with a low-frequency alternating speed component,
the modulated component is dissociated in the total signal S coming from the detector such as the mass spectrometer (1), and
the spurious signal Sp associated with the rotation speed V of the primary pump (6) is computed from the modulated component and the degree of modulation of the rotation speed of the primary pump (6) and subtracted from the total signal S to deduce the usable signal Su therefrom in real time.

8. Leak detector system for implementing a method according to any of claims 1 to 8, comprising a detector such as a mass spectrometer (1) connected to the aspiration side (5) of a primary pump (6) driven by a rotational drive system (19, 20), with an aspiration inlet (9) selectively connectable by control valves (11, 13, 16) either to the aspiration side (5) of the primary pump (6) or to the aspiration side (2) or an intermediate area (14) of the secondary pump (3), **characterized in that** the rotational drive system (19, 20) of the primary pump (6) is adapted to vary the rotation speed V of the primary pump (6) between at least two different rotation speeds (V1, V2).

9. Device according to claim 8, **characterized in that** the rotational drive system (19, 20) of the primary pump (6) is adapted to modulate the rotation speed V of the primary pump (6) with a low-frequency alternating speed component.

10. Device according to claim 9, **characterized in that** it comprises a speed sensor (21) for measuring the rotation speed V of the primary pump (6), means (22) for storing the time sequence of signals V from said speed sensor (21) and signals S produced by the detector such as the mass spectrometer (1), and computation means (22) for computing the usable signal Su from the stored signals (S, V).

## Patentansprüche

1. Verfahren zur Leckerfassung durch Ansaugung der Gase an einem Ansaugungseingang (9) und durch Erfassung eines Gastracers mittels eines Detektors, beispielsweise ein Massenspektrometer (1), das mit einer Primär- (6) und einer Sekundärpumpe (3) zusammenwirkt, **dadurch gekennzeichnet, dass** es mindestens einen ersten Ansaugschritt enthält, im Verlauf dessen die Primärpumpe (6) gemäß einem ersten Drehzahlbereich (V1) in der Umdrehung angetrieben wird, und einen zweiten Ansaugschritt, in dessen Verlauf die Primärpumpe (6) gemäß einer zweiter Geschwindigkeit (V2), die vom ersten Drehzahlbereich (V1) verschieden ist, in der Umdrehung angetrieben wird.

2. Verfahren gemäß Anspruch 1, **dadurch gekennzeichnet, dass** die zweite Geschwindigkeit (V2) die Nenngeschwindigkeit der Primärpumpe (6) ist, und die Geschwindigkeiten des ersten Drehzahlbereichs (V1) höher sind als die Nenngeschwindigkeit der Primärpumpe (6).

3. Verfahren gemäß Anspruch 2, **dadurch gekennzeichnet, dass** der erste Drehzahlbereich (V1) während einer begrenzten Dauer des ersten Vorevakuierungsschrittes verwendet wird, in dessen Verlauf der Ansaugeingang (9) direkt an die Ansaugung (5) der Primärpumpe (6) angeschlossen wird.

4. Verfahren gemäß Anspruch 2, **dadurch gekennzeichnet, dass** der erste Drehzahlbereich (V1) im Verlauf eines Schrittes Test durch vollständigen Gegenstrom verwendet wird, um eine umfangreiche Entgasung zu kompensieren oder größere Lecks zu erfassen.

5. Verfahren gemäß Anspruch 1, **dadurch gekennzeichnet, dass** die Geschwindigkeiten des ersten Drehzahlbereichs (V1) kleiner sind als die Nenndrehzahl (V2) der Primärpumpe (6), und der erste Drehzahlbereich (V 1) im Verlauf eines Schrittes Test durch vollständigen Gegenstrom dazu verwendet wird, die Pumpgeschwindigkeit zu senken und somit die Empfindlichkeit der Erfassung zu erhöhen.

6. Verfahren gemäß Anspruch 1, **dadurch gekennzeichnet, dass** man im Verlauf eines Schrittes Direkttest die Geschwindigkeiten (V1, V2) und die Signale (S 1, S2) registriert, die vom Detektor, z.B. dem Massenspektrometer (1), im Verlauf jeweils der beiden Ansaugschritte erzeugt werden, und man berechnet ausgehend von den registrierten Werten das Nutzsignal Su, welches resultiert aus dem Gastracer, der vom Ansaugeingang (9) herkommt, indem man das Störsignal Sp abschneidet, das vom Gastracer resultiert, der gegen den Strom durch die Sekundärpumpe (3) aufsteigt.

7. Verfahren gemäß Anspruch 6, **dadurch gekennzeichnet, dass**:
man teilweise die Drehzahl V der Primärpumpe (6) mit einer alternativen niederfrequenten Geschwindigkeitskomponente moduliert,
man in dem vom Detektor, z.B. dem Massenspektrometer (1), herkommenden Gesamtsignal S die modulierte Komponente dissoziiert,
man ausgehend von der modulierten Komponente und vom Umdrchungsgeschwindigkeitsmodulationswert der Primärpumpe (6) das Störsignal Sp berechnet, das mit der Umdrehungsgeschwindigkeit V der Primärpumpe (6) zusammenhängt, und man schneidet es vom Gesamtsignal S ab, um daraus in Echtzeit das Nutzsignal Su abzuleiten.

8. Leckdetektorvorrichtung für die Ausführung eines Verfahrens gemäß einem der Ansprüche 1 bis 7, beinhaltend einen Detektor, z.B. ein Massenspektrometer (1), der an die Ansaugung (5) einer Primärpumpe (6) angeschlossen ist, die von einer Drehantriebsvorrichtung (19, 20) angetrieben wird, mit einem Ansaugungseingang (9), der selektiv mittels Steuerventilen (11, 13, 16) entweder an die Ansaugung (5) der Primärpumpe (6), oder an die Ansaugung (2) oder in einem Zwischenbereich (14) der Sekundärpumpe (3) angeschlossen werden kann, **dadurch gekennzeichnet, dass** die Drehantriebsvorrichtung (19, 20) der Primärpumpe (6) geeignet ist, um die Umdrehungsgeschwindigkeit V der Primärpumpe (6) zwischen mindestens zwei voneinander verschiedenen Drehzahlen (V1, V2) zu wechseln.

9. Vorrichtung gemäß Anspruch 8, **dadurch gekennzeichnet, dass** die Drehantriebsvorrichtung (19, 20) der Primärpumpe (6) geeignet ist, die Umdrehungsgeschwindigkeit V der Primärpumpe (6) mit einer alternativen niederfrequenten Geschwindigkeitskomponente zu modulieren.

10. Vorrichtung gemäß Anspruch 9, **dadurch gekennzeichnet, dass** sie einen Geschwindigkeitssensor (21) zum Messen der Drehzahl V der Primärpumpe (6) enthält, Mittel (22) zum Registrieren der zeitlichen Folge der Signale V dieses Geschwindigkeitssensors (21) und der Signale S, die vom Detektor, z.B. dem Massenspektrometer (1), erzeugt werden, und Rechenmittel (22), um das Nutzsignal Su ausgehend von den registrierten Signalen (S, V) zu berechnen.
